# EUROPEAN PATENT APPLICATION

(11) **EP 3 706 220 A1**
(43) Date of publication of application: **09.09.2020**
(21) Application number: 18872327.4
(22) Date of filing: 31.10.2018
(51) Int. Cl.: H01M 8/0228, C22C 45/02, C22C 45/04, C23C 4/06, C23C 4/10, C23C 4/123, C23C 4/18, C23C 24/06, C23C 24/08, H01M 8/0206, H01M 8/0208, H01M 8/0258, H01M 8/10

(54) **THIN-SHEET MOLDED-MEMBER HAVING FINE THREE-DIMENSIONAL SURFACE PATTERN, FUEL CELL SEPARATOR, AND METHOD AND FACILITY FOR MANUFACTURING SAME**

(30) Priority: 01.11.2017 JP 2017212303; 28.12.2017 JP 2017254085
(71) Applicant: Usui Co., Ltd., Sunto-gun, Shizuoka 411-8610 (JP); Kiuchi, Manabu, Tokyo 1080014 (JP)
(72) Inventor: KIUCHI Manabu, Tokyo 108-0014 (JP); KURAHASHI Ryurou, Osaka-shi Osaka 551-0022 (JP); FUKUDOME Yoshihisa, Osaka-shi Osaka 551-0022 (JP); KAWASAKA Kenji, Osaka-shi Osaka 551-0022 (JP); KOREEDA Koji, Osaka-shi Osaka 551-0022 (JP); SHIN Yoshio, Osaka-shi Osaka 551-0022 (JP); MORIMOTO Toshiharu, Osaka-shi Osaka 551-0022 (JP); KAKUDOU Shigeo, Osaka-shi Osaka 551-0022 (JP); TAKIKAWA Kazunori, Numazu-shi Shizuoka 410-0037 (JP); ITO Hidetaka, Sunto-gun Shizuoka 411-8610 (JP); KONDOU Hiroaki, Sunto-gun Shizuoka 411-8610 (JP); KUBOTA Satoshi, Higashiosaka-shi Osaka 578-0901 (JP); KIM Sooyoung, Higashiosaka-shi Osaka 578-0901 (JP); TSURUOKA Kaoru, Higashiosaka-shi Osaka 578-0901 (JP); KANAMARU Tomohiro, Higashiosaka-shi Osaka 578-0901 (JP)
(74) Representative: TBK
(86) International application number: PCT/JP2018/040463
(87) International publication number: WO 2019/088154

(57) **Abstract**

[Problem] To provide a sheet formed product that, in addition to being thin, has a small groove interval, groove width, and groove depth, that has a large contact surface area with oxygen gas or hydrogen gas, that is suitable for simply and at low cost producing a lightweight compact separator, and a manufacturing method for same.

[Solution] In the sheet formed product (amorphous thin sheet) according to the present invention, a metal matrix on which is formed a passivation layer on a surface layer thereof and that exhibits corrosion resistance has a three-dimensional surface structure, for example a groove-like uneven shape on a surface thereof. On the front surface having the uneven shape (or also on the back surface), particles of a conductive material component penetrate the passivation layer, and are exposed on the surface without being in solid solution in the metal matrix.

## Description

### Technical Field

The present invention relates to a thin-sheet formed product preferably having a surface microstructure on a surface thereof provided with an electrically conductive non-conductive film on a surface layer thereof, a metal separator for a fuel cell having a large hydrogen gas/oxygen gas contact area and a narrow contact width to a gas diffusion layer (GDL), and a method and so on for manufacturing the same.

### Background Art

Polymer electrolyte fuel cells (hereafter, PEFC) extract energy as electric power from the reaction between hydrogen and oxygen and generate water, and are expected to be useful for future society as a clean power source with no CO₂ emission. The use of PEFCs for automobiles, household use fuel cells, mobile phones, and so on is well known. A component called a separator is used inside a PEFC. This is mainly a component that forms a flow path for hydrogen and oxygen and plays a role in electric conduction between cells.

Two kinds of material, carbon and metal, are generally used as the material of PEFC separators. Since carbon is poor in workability and its strength is low, thus increasing thickness and size, metallic separators are expected to be used in automotive PEFCs, so their development is in progress not only at automobile manufacturers but also at research institutions such as universities. Ultra-thin metal separators have also been designed to be compact and lightweight.

In order to improve the performance and compactness of metal separators, it is necessary to refine the separator shape. By increasing the flow path contact area to increase the capacity as a separator, the contact area with the gas flow path, MEA and GDL are increased, and high performance can be achieved. Although it is possible to make the groove width and groove depth of the separator as small as possible, productivity and flatness are reduced. For this reason, precision press technology is being used to develop separators that aim to increase product accuracy and reduce thickness.

During power generation of a fuel cell, voltage drop occurs due to the following four factors: <1> internal current resistance overvoltage (hydrogen passing through the electrolyte membrane), <2> resistance overvoltage (loss according to Ohm's law), <3> activation overvoltage (catalyst activation loss), and <4> concentration overvoltage (loss due to insufficient gas diffusivity). Extremely thin metal separators are significant in reducing the voltage drop due to resistance overvoltage.

Patent Literature 1 (PTL 1) reports a manufacturing method in which stainless steel is used as a base, and to provide conductivity with the base, precipitates penetrating a passivation part are provided to increase the conductivity of the stainless interior and its surface. However, in order to reduce the thickness of stainless steel, a plurality of cold rolling steps are required, and there is a possibility that precipitates may be the starting point of sheet through cracks in the cold rolling step. It has been pointed out that stainless steel has high strength, so that press defects such as springback and warping are likely to occur during press forming. Therefore, it is necessary to perform the pressing step a plurality of times. However, in the second and subsequent presses, it is difficult to perform the positioning, which significantly reduces the productivity.

PTL 2 discloses a method of forming a carbon layer on the surface of a lightweight titanium base material having excellent corrosion resistance in order to increase the electrical conductivity, and PTL 3 discloses a method of concentrating a platinum group element on a surface layer. However, the Young's modulus of titanium is small, and springback is likely to occur, so the number of press steps could be greater than that for stainless steel. Also, titanium is an expensive material.

In PTL 4 and PTL 5, formability, corrosion resistance, contact resistance, and power generation characteristics at a supercooled liquid temperature range are reported for a separator made of a metallic glass material. Since metallic glass has a supercooled liquid phase state, it can be processed into a complicated shape by keeping it in the supercooled liquid phase temperature range. However, the supercooled liquid phase temperature range is narrow, metallic glass is expensive due to its limited component composition, and it is difficult to handle as an industrial material.

PTL 6 discloses the manufacturing apparatus for producing an amorphous thin plate provided with grooves and a method therefor, allowing for a thin plate provided with grooves required for PEFC separators. Using a spray gun, flying powder particles are quenched to form a film on the surface of a substrate, rolled with a grooved roll while maintaining the temperature, and finally released from the substrate to form a grooved thin plate amorphous material.

### Citation List

### Patent Literature

PTL 1: Japanese Patent Publication No. 6112262
PTL 2: Japanese Unexamined Patent Application Publication No. 2013-109891
PTL 3: Japanese Unexamined Patent Application Publication No. 2014-075287
PTL 4: Japanese Unexamined Patent Application Publication No. 2007-83692
PTL 5: Japanese Unexamined Patent Application Publication No. 2011-249247
PTL 6: Japanese Unexamined Patent Application Publication No. 2013-221167

### Summary of Invention

### Technical Problem

As described above, in the case of a metal fuel cell separator that is a product having a surface microstructure and the microstructure is a groove-like, it is important to reduce the thickness and to make the groove width and groove depth fine, to increase the contact area with the GDL/hydrogen/oxygen, and to reduce the contact width with the GDL. Needless to say, it is also essential that corrosion resistance, conductivity, and formability are all satisfied at the same time.

However, it is extremely difficult to efficiently produce such a product having a surface microstructure or a separator for a fuel cell at low cost with the conventional technology.

The present invention provides a method of manufacturing a lightweight and compact fuel cell separator that is thin and also has a small groove width and a small groove depth, a narrow contact width with the GDL, and a large contact surface area between the GDL and the oxygen gas and the hydrogen gas; and a thin-sheet formed product having a three-dimensional surface microstructure with uneven portions of the required depth and thickness, preferably a product with a microstructure on the surface thereof provided with an electrically conductive non-conductive film having conductive material particles exposed on the surface layer, the method of manufacturing being suitable for manufacturing simply and at low cost; and a fuel cell separator formed from such a thin-sheet formed product.

### Solution to Problem

The thin-sheet formed product according to the present invention has a three-dimensional surface microstructure with uneven portions of a desired depth and thickness, and includes a metal matrix exhibiting corrosion resistance by the formation of a passivation layer on a surface layer thereof, and a conductive material that penetrates the passivation layer of the surface layer region of the passivation layer and is electrically continuous with the metal matrix in the interior is partially exposed on a protruding front end surface (convex portions) in the three-dimensional surface structure of the thin-sheet formed product and on a back surface opposite to the front end surface.

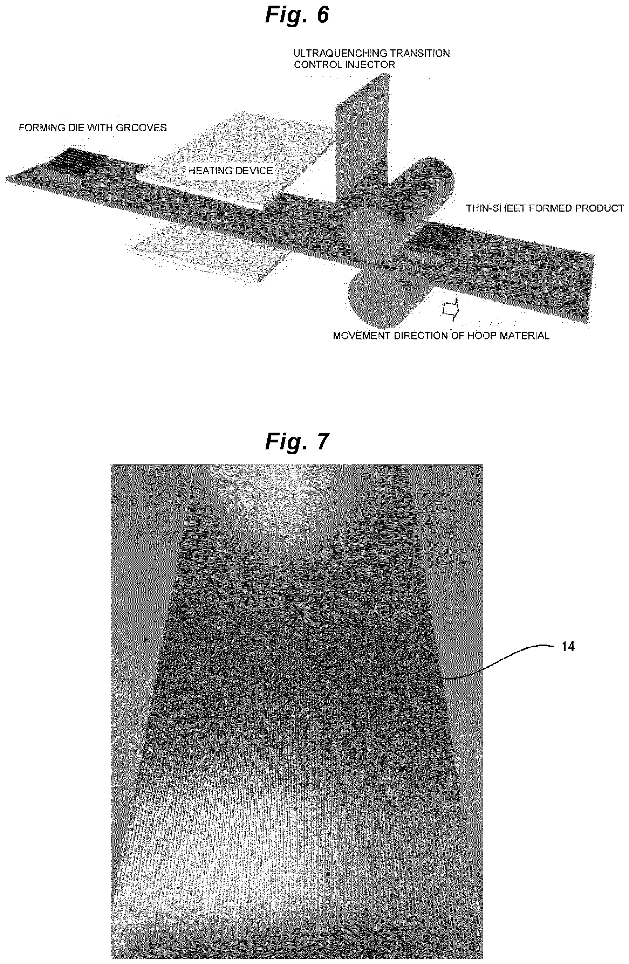

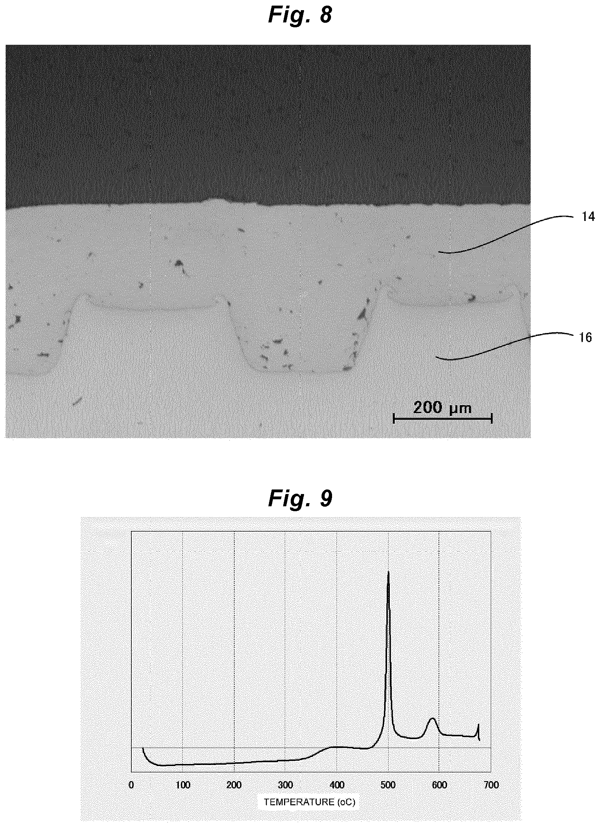

Figs. 7 and 8 exemplify a three-dimensional surface structure in which the uneven portions of the thin-sheet formed product according to the present invention have a fine groove shape. Although the uneven portions according to the present invention have a fine groove shape, the groove may be formed only of parallel stripes as illustrated in Fig. 7 or may include a non-parallel portion.

In the thin-sheet formed product having a three-dimensional surface microstructure with uneven portions of a desired depth and thickness according to the present invention, the front end surface is provided with the conductive material at a higher density than the back surface.

Note that the conductive material in the metal matrix does not form a solid solution with the metal matrix, and may have a granular, flaky, flake, or amorphous precipitate form.

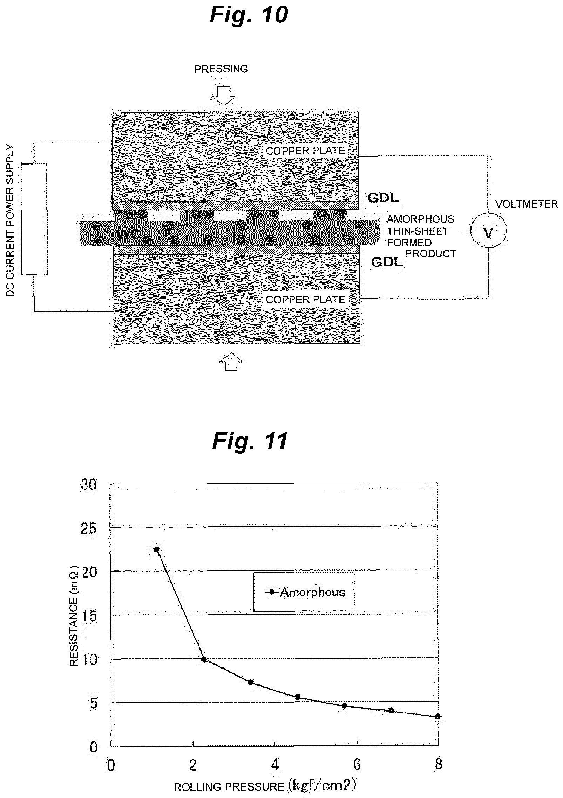

The thin-sheet formed product indicated as "amorphous thin film" in Fig. 10 schematically illustrates a state in which the conductive material component is exposed on the surface of the three-dimensional surface structure according to the invention in which the uneven portions are formed into fine grooves.

Since the passivation layer in the surface layer lacks conductivity, the contact resistance on the surface of a thin-sheet formed product is usually extremely large. However, in the present invention, particles of the conductive material component are exposed on the surface layer, and the particles of the conductive material component penetrate through the passivation layer of the surface layer region and are electrically continuous with the internal metal matrix. Therefore, the contact resistance of the thin-sheet formed product of the present invention is low at the protruding front end surface in a three-dimensional surface microstructure having the uneven portion with the desired depth and thickness, and the back surface opposite the front end surface.

As described above, the thin-sheet formed product according to the present invention has excellent corrosion resistance and electric conductivity, and has the grooves of the three-dimensional surface microstructure of the thin-sheet formed product as flow paths. Therefore, it is suitable as a fuel cell (PEFC) separator material because it can make contact with the oxygen, hydrogen, and GDL.

In the thin-sheet formed product having a three-dimensional surface microstructure with uneven portions of a desired depth and thickness according to the present invention, the metal matrix is amorphous, and the conductive material is WC (tungsten carbide) or graphite.
Since the amorphous metal matrix has extremely high corrosion resistance, it is suitable for use as a fuel cell separator. Also, the fact that the conductive material component is WC or C (graphite carbon) is extremely advantageous in terms of corrosion resistance and conductivity. The WC or the like may have an average particle diameter of 1 to 10 µm and exceed the thickness of the passivation layer.

Preferably the metal matrix of the thin-sheet formed product according to the present invention is an amorphous alloy containing Si and Mn.

Si and Mn are elements that tends to be contained when using a low-grade powder material as a raw material for forming the metal matrix. When a powder material containing these is melted and quenched to form an amorphous alloy, the above-described metal matrix can be produced at low cost. Therefore, if the above-mentioned metal matrix is an amorphous alloy containing Si and Mn, a thin-sheet formed product having a three-dimensional surface microstructure having uneven portions with a desired depth and thickness can be manufactured at low cost, and the cost of the fuel cell separator can be easily reduced.

More preferably the metal matrix of the thin-sheet formed product according to the present invention is an amorphous alloy having the composition Fe56.6Cr9Ni8Mo2Cu0.2Si2.5Mnl.5Nb0.7P19C0.5, Fe55Cr10Mo2Ni7Mn1.5P19B3Si2.5 or Ni65Cr15P16B4 (all numerical values are at%).

The amorphous alloy having the above composition can be prepared by melting and rapidly cooling gas atomized powder having the same composition. Due to the substantial content of Si and Mn, and so on, these powders are available at relatively low cost, and thus the cost of the metal matrix formed therefrom is also low.

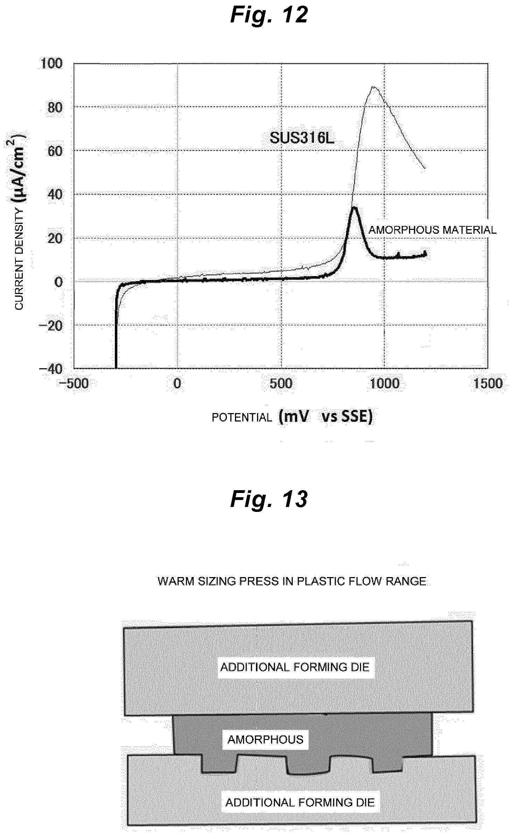

However, as shown in Fig. 9, the composition is easily made amorphous, and as shown in Fig. 12, the alloy film having this composition has excellent corrosion resistance. it is also satisfactory in terms of form ability.

In view of the above, a thin-sheet formed product having a metal matrix composed of an amorphous alloy having the above composition and having grooves or the like as the three-dimensional surface microstructure is extremely suitable as a material for a fuel cell separator.

In order to make the component system of the metal matrix the above, the component system of the powder material or the like may have to be slightly different from that of the metal matrix.

The thin-sheet formed product having a three-dimensional surface microstructure with uneven portions of a desired depth and thickness according to the present invention is obtained by melting and mixing raw material metal powder including metal material powder from which the metal matrix is constituted and powder of the conductive material, while spraying the raw material metal powder together with flame and an assist gas using a required thermal spray gun; directing the spray together with the flame at the required distance and angle towards an inverted three-dimensional surface structure of a forming die that has the inverted three-dimensional surface microstructure with uneven portions of a desired depth and thickness corresponding to the inverted shape (transferred shape) of the three-dimensional surface microstructure with uneven portions of a desired depth and thickness, in which the conductive material is provided on the bottom surfaces of concave portions of the inverted three-dimensional surface structure, and that has been heated to a desired temperature in advance; commencing cooling of the raw material metal powder before the melted and mixed raw material metal powder reaches the forming die by the flow of a predetermined cooling medium that is sprayed around the raw material metal powder; cohesively laminating the raw material metal powder that has reached a required solidified state or semi-solidified state on the uneven portions of the inverted three-dimensional surface microstructure of the forming die so that the concave portions of the uneven portions is filled, and continuing to spray the raw material metal powder until a required deposition thickness is achieved; subsequently performing upsetting press forming on the surface of the cohesive laminate using a predetermined tool to apply a desired surface structure, and then cooling the cohesive laminate; and releasing the cohesive laminate from the forming die.

The fuel cell separator according to the present invention is formed of any of the above thin-sheet formed products having grooves or the like as a three-dimensional surface microstructures.

As described above, such a fuel cell separator is preferable.

A method for manufacturing a thin-sheet formed product having a three-dimensional surface microstructure with uneven portions of a desired depth and thickness according to the present invention includes:
1) heating to a desired temperature in advance a forming die having an inverted three-dimensional surface microstructure with uneven portions of a desired depth and thickness corresponding to the inverted shape of the three-dimensional surface microstructure with uneven portions of a desired depth and thickness of the manufactured thin-sheet formed product;
2) melting and mixing raw material metal powder including metal material powder from which a metal matrix exhibiting corrosion resistance by the formation of a passivation layer on a surface layer thereof is constituted and conductive material powder, while spraying the raw material metal powder together with flame and an assist gas using a required thermal spray gun;
3) directing the spray together with flame and the assist gas at the required distance and angle towards the inverted three-dimensional surface structure of the forming die that has been heated to the desired temperature in advance;
4) commencing cooling of the raw material metal powder before the melted and mixed raw material metal powder reaches the forming die by the flow of a predetermined cooling medium that is sprayed around the raw material powder;
5) cohesively laminating the raw material metal powder that has reached a required solidified state or semi-solidified state on the uneven portions of the inverted three-dimensional surface microstructure of the forming die so that the concave portions of the uneven portions is filled, and continuing to spray the raw material metal powder until a required deposition thickness is achieved;
6) subsequently performing upsetting press forming (press forming to apply plastic flow to the cohesive laminated metal matrix) on the surface of the cohesive laminate using a predetermined tool in a desired temperature range to apply a desired surface structure; and
7) subsequently cooling, releasing, and collecting the cohesive laminate from the forming die.

According to such a manufacturing method, a conductive material component is exposed on the surface of the metal matrix that exhibits corrosion resistance by forming a passivation layer on the surface layer thereof, and penetrates through the passivation layer and is electrically continuous with the metal matrix. Therefore it is possible to manufacture a thin-sheet formed product having a three-dimensional surface microstructure provided with uneven portions having a desired depth and thickness. Immediately after cohesively laminating onto the forming die having an inverted three-dimensional surface microstructure that has been heated to the desired temperature, the cohesive laminate is warm-pressed before the film cools. Therefore, it is possible to efficiently perform the pressing while plasticizing the cohesive laminate to eliminate the pores therein and reduce the energy consumed for pressing.

In the case where an amorphous material is formed as the cohesive laminate and the pressing step is performed immediately after spraying, if the cohesive laminate at the time of pressing is in a supercooled liquid phase state and is in a temperature range where it has a plastic fluidity (that is, within the range of about 430 to 480°C), it is possible to carry out plastic working even if it is amorphous.

In the above manufacturing method, forming the thin-sheet formed product of corrosion resistant alloy by spraying may be performed using a quenching thermal spray gun melting the raw material metal powder, spraying it together with flame, and cooling the flame with a cooling medium (cooling gas).

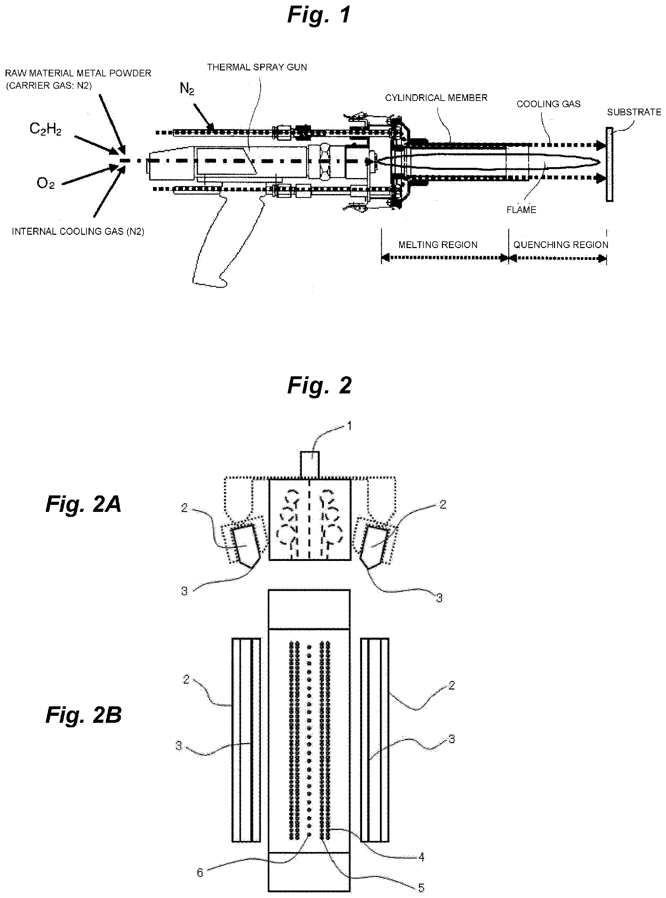

For example, an ultraquenching transition control injector as shown in Fig. 1 or Figs. 2A and 2B may be used as the thermal spray gun. This injector is capable of forming on a forming die surface a quenched film of the powder material that was once melted, using metal powder as raw material, and further producing a quenched thin sheet after releasing from the forming die. Therefore when a powder material having a composition that can easily become amorphous is used, it is possible to obtain an amorphous cohesive laminate and thin sheet. Specifically, the powder material that is completely melted in the flame during the flight is quenched by a cooling gas (cooling medium) such as nitrogen gas or mist before reaching the forming die (cooling rate is about 1 million °C/sec or more), and as a result, the cohesive laminate formed on the surface of the forming die becomes amorphous. The difference between the ultraquenching transition control injectors of Fig. 1 and Figs. 2A and 2B is the width of film formed at one time, the device of Fig. 1 has a width of 15 mm and that of Figs. 2A and 2B has a width of 300 mm. With either ultraquenching transition control injector, cohesive laminates and thin sheets of the same quality can be obtained. However, taking into consideration the production efficiency per ultraquenching transition control injector, the ultraquenching transition control injector in Figs. 2A and 2B is more suitable, so that mainly this injector is used to prepare cohesive laminates in the embodiments described later.

When forming a thin-sheet formed product made of a corrosion-resistant alloy by the above-mentioned quenching thermal spray gun, in addition to the above-mentioned raw material metal powder (powder material), a powder of a conductive material component may be sprayed together with the flame. Even if the powder of the conductive material component is added, it is not difficult to make the film to be formed amorphous because of the rapid cooling as described above. In such a case, a part of the conductive material may be exposed on the surface and distributed so as to penetrate the passivation layer formed on the surface layer or the inner side of the metal matrix and become electrically continuous with the metal matrix in the interior. As a result, as described above, it is possible to easily manufacture a thin-sheet formed product having low contact resistance between the surface of the three-dimensional surface microstructure having the uneven portions and the back surface on the opposite side.

A method for manufacturing a thin-sheet formed product with a high concentration of conductive material on a front end surface of a three-dimensional surface microstructure with uneven portions of a desired depth and thickness according to the present invention, includes attaching and fixing the powder of the conductive material on the bottom surfaces of the concave portions of the inverted three-dimensional surface structure using a spraying method or coating method in advance, and then spraying and cohesively laminating the raw material metal powder in a solidified state or a semi-solidified state.

According to such a manufacturing method, a thin-sheet formed product having lower contact resistance between the surface of the three-dimensional surface microstructure having the uneven portions and the back surface on the opposite side can be easily manufactured.

The upsetting press forming in the desired temperature range on the surface of the cohesive laminate according to the present invention is performed by press forming or by roll forming.

The upsetting press forming may also include forming such as trimming and piercing and so on, on the surface of the cohesive laminate, whereby a thin-sheet formed product that is practical and has high added value can be obtained.

A method for manufacturing a thin-sheet formed product having a three-dimensional surface microstructure with uneven portions of a desired depth and thickness according to the present invention includes:
1) heating to a desired temperature in advance, a forming die that has an inverted three-dimensional surface microstructure with uneven portions of a desired depth and thickness corresponding to the inverted shape of the three-dimensional surface microstructure with uneven portions of a desired depth and thickness of the manufactured thin-sheet formed product, and in which the conductive material is arranged on the bottom surfaces of the concave portions of the inverted three-dimensional surface microstructure using a spraying method or coating method in advance;
2) melting and mixing raw material metal powder that is metal material powder from which a metal matrix exhibiting corrosion resistance by the formation of a passivation layer on a surface layer thereof is constituted, while spraying the raw material metal powder together with flame and an assist gas using a required thermal spray gun;
3) directing the spray together with flame and an assist gas at the required distance and angle towards the inverted three-dimensional surface structure of the forming die that has been heated to the desired temperature in advance;
4) commencing cooling of the raw material metal powder before the melted and mixed raw material metal powder reaches the forming die by the flow of a predetermined cooling medium that is sprayed around the raw material metal powder;
5) cohesively laminating the raw material metal powder that has reached a required solidified state or semi-solidified state on the uneven portions of the inverted three-dimensional surface microstructure of the forming die so that the concave portions of the uneven portions is filled, and continuing to spray the raw material metal powder until a required deposition thickness is achieved;
6) subsequently performing upsetting press forming (press forming to apply plastic flow to the cohesive laminated metal matrix) on the surface of the cohesive laminate using a predetermined tool in a desired temperature range to apply a desired surface structure; and
7) subsequently cooling, releasing, and collecting the cohesive laminate from the forming die.

With such a manufacturing method, a thin-sheet formed product including a metal matrix having a passivation layer formed on the surface layer thereof that exhibits corrosion resistance, and having a three-dimensional surface microstructure provided with uneven portions of a desired depth and thickness can be manufactured. Immediately after cohesively laminating onto the forming die having an inverted three-dimensional surface microstructure that has been heated to the desired temperature, the cohesive laminate is warm-pressed before the film cools. Therefore, it is possible to efficiently perform the pressing while plasticizing the cohesive laminate to eliminate the pores therein and reduce the energy consumed for pressing.

In the case where an amorphous material is formed as the cohesive laminate and the pressing step is performed immediately after spraying, if the cohesive laminate at the time of pressing is in a supercooled liquid phase state and is in a temperature range where it has a plastic fluidity (that is, within the range of about 430 to 480°C), it is possible to carry out plastic working even if it is amorphous.

A method of manufacturing a thin-sheet formed product having a conductive material on a front end surface and a back surface opposite to the front end surface of the three-dimensional surface microstructure with uneven portions of a desired depth and thickness according to the present invention, includes attaching and fixing the powder of the conductive material to the back surface of the cohesive laminate using a spraying method or coating method, and then performing the upsetting press forming in a desired temperature range by press forming or by roll forming.

A method for manufacturing a thin-sheet formed product having a three-dimensional surface microstructure with uneven portions of a desired depth and thickness according to the present invention includes:
1) placing on a transport unit of a transport device a forming die that has an inverted three-dimensional surface microstructure with uneven portions of a desired depth and thickness corresponding to the inverted shape of the three-dimensional surface microstructure with uneven portions of a desired depth and thickness of the manufactured thin-sheet formed product, and in which the conductive material is arranged on the bottom surfaces of the concave portions of the inverted three-dimensional surface microstructure using a spraying method or coating method in advance;
2) pre-heating the forming die to a desired temperature by transporting the transport unit on which the forming die is placed to a heating device position for preheating;
3) transporting the transport unit on which the preheated forming die is placed to a thermal spray unit position including a thermal spray gun;
4) cohesively laminating, onto the inverted three-dimensional surface structure of the transported forming die, a metal matrix exhibiting corrosion resistance by the formation of a passivation layer on a surface layer thereof by spraying using the thermal spray gun;
5) transporting the transport unit on which the forming die including the cohesive laminate deposited thereon is placed, to an upsetting press forming unit;
6) applying a desired surface structure to the cohesive laminate on the transported forming die by upsetting press forming by either press forming or roll forming;
7) transporting the transport unit on which is placed the forming die including the cohesive laminate that is formed thereon and on which the desired surface structure has been applied, from the upsetting press forming unit to outside; and
8) cooling the transported forming die, and releasing the cohesive laminate from the forming die and collecting it.

With such a manufacturing method, it is possible to manufacture a thin-sheet formed product having the conductive material partially exposed on the projecting front end surface in the three-dimensional surface microstructure with uneven portions of a desired depth and thickness of the metal matrix on which is formed a passivation layer on a surface layer thereof that exhibits corrosion resistance, and penetrating the passivation layer in the surface layer region of the passivation layer and being electrically continuous with the metal matrix in the interior.

A method for manufacturing a thin-sheet formed product having a three-dimensional surface microstructure with uneven portions of a desired depth and thickness according to the present invention includes:
1) after step 7) in paragraph [0026],
2) removing the forming die from the transport unit on which is placed the forming die on which the cohesive laminate is formed, and releasing the cohesive laminate from the forming die; and
3) performing an additional forming process on the cohesive laminate by warm pressing using another additional forming die to apply a desired surface structure, and then cooling the cohesive laminate, releasing and collecting the cohesive laminate from the forming die.

According to such a manufacturing method, it is possible to manufacture a thin-sheet formed product having a fine highly accurate three-dimensional surface structure with uneven portions of a desired depth and thickness on the metal matrix having a passivation layer formed on a surface layer thereof and that exhibits corrosion resistance, or also having a three-dimensional surface microstructure with uneven portions of a desired depth and thickness, on the rear surface.

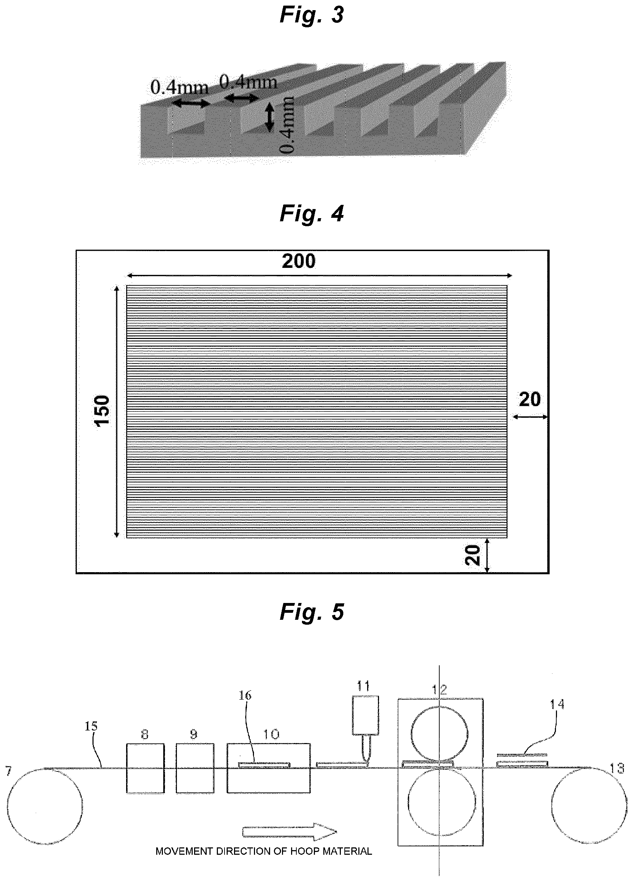

Also, preferably the step of forming the metal cohesive laminate on which is formed the passivation layer on a surface layer thereof and that exhibits corrosion resistance and the step of warm pressing of the film are performed on a continuous path in the sequence (within the) heating device for preheating, (a target position of spraying of) the ultraquenching thermal spray gun, and (a position between rolls of) a rolling mill for performing the press operation, by transporting the forming die with the transport device. An outline of the procedure and the facility in such a case is illustrated in Figs. 5 and 6.

If the forming die is transported by the transport device in this way, and the cohesive laminate is formed and pressed in sequence via the heating device, the thermal spray gun, and the rolling mill, then warm pressing of the cohesive laminate can be performed immediately after forming the cohesive laminate, continuously and at preferable timing. In other words, an amorphous alloy is formed as the cohesive laminate, and it can be properly pressed while it is in the supercooled liquid phase temperature range. This makes it possible to accurately and efficiently manufacture the preferred thin-sheet formed product having a three-dimensional surface microstructure with uneven portions of a desired depth and thickness.

Preheating the die by arranging a heating device as described above is indispensable for maintaining the formed film in the predetermined temperature range. If the cohesive laminate is not preheated, the temperature of the film formed by the thermal spray gun drops rapidly, making it difficult to press the film in the preferred temperature range.

Preferably after the metal cohesive laminate that has been pressed, that has a passivation layer on a surface layer thereof, and that exhibits corrosion resistance has been released from the forming die and removed, it is further subjected to warm press forming (in a temperature region where the cohesive laminate is in the supercooled liquid phase state, the same as described above) using another additional forming die. Fig. 13 is a schematic diagram illustrating the press forming.

The press forming referred to here is to perform additional forming on the cohesive laminate. The die used as the additional forming die may have uneven portions of the inverted three-dimensional surface microstructure that matches or substantially matches those of the die that has just been used. For example, the groove-like uneven portions previously formed in the cohesive laminate are superimposed on the uneven surface of the inverted three-dimensional surface structure of the additional forming die for the additional forming operation (fitting the convex portions of the cohesive laminate to the concave portions of the additional forming die), and the press forming is performed.

In this way, it is possible to improve the shape accuracy of the three-dimensional surface microstructure (for example, groove-like unevenness) formed on the metal cohesive laminate (metal matrix) exhibiting corrosion resistance with a passivation layer on a surface layer thereof. In addition, the state of adhesion of the conductive material component to the uneven surface or the like can be further strengthened. In other words it is possible to obtain a thin-sheet formed product that is particularly advantageous for use as a fuel cell separator.

Instead of removing the metal cohesive laminate that has been pressed as illustrated in Fig. 6 and exhibits corrosion resistance with a passivation layer formed on a surface layer thereof, from the forming die used at that time, the metal cohesive laminate may be kept on the same die and the warm press forming of the metal cohesive laminate may be performed (same as above). In this case also, it is possible to obtain a thin-sheet formed product with a highly accurate uneven surface shape and so on, with the conductive material component strongly bonded, the same as described above, and with internal pores in the interior thereof reduced.

A facility for manufacturing a thin-sheet formed product having a three-dimensional surface microstructure with uneven portions of a desired depth and thickness according to the present invention includes:
a) a transport device that transports a forming die that has an inverted three-dimensional surface microstructure with uneven portions of a desired depth and thickness corresponding to the inverted shape of the three-dimensional surface microstructure with uneven portions of a desired depth and thickness and in which a conductive material component is attached to a surface thereof, in a state where the surface facing upward, and
b) in the facility, a heating device for preheating the forming die; a quenching thermal spray gun that forms, on the surface of the forming die, a metal cohesive laminate that has a passivation layer on a surface layer thereof and that exhibits corrosion resistance, by spraying and melting metal powder together with flame and cooling the flame with a cooling gas; and a rolling mill that performs warm pressing of the cohesive laminate having corrosion resistance immediately after forming, are arranged in this order on a transport path of the transport device. Such a manufacturing facility is illustrated schematically in Figs. 5 and 6.

When such a manufacturing facility is used, preheating of the forming die by the heating device, forming the corrosion resistant cohesive laminate with the ultraquenching thermal spray gun, and pressing the cohesive laminate immediately afterwards with the rolling mill can be properly performed continuously in that sequence, by transporting the forming die by the transport device. Therefore it is possible to efficiently manufacture for example a thin sheet with grooves that is a thin-sheet formed product including a metal matrix with a passivation layer formed on a surface layer thereof and that exhibits corrosion resistance with a three-dimensional surface microstructure with uneven portions of a desired depth and thickness that is suitable as a separator for a fuel cell.

In the manufacturing facility, more preferably an attaching device that attaches the conductive material component to the bottom surfaces of the concave portions of the inverted three-dimensional surface structure of the forming die by coating or by spraying is disposed in a position on the transport path of the transport device on the upstream side of the heating device.

By providing the conductive material component attaching device on the transport path, one step in the above manufacturing method, that is, the step of providing and attaching the conductive material component particles on the bottom surfaces of the concave portions of the inverted three-dimensional surface structure, can also be performed automatically and continuously. Thus, it is possible to more efficiently manufacture a thin-sheet formed product having a three-dimensional surface microstructure with uneven portions of a desired depth and thickness such as grooves that is suitable for a fuel cell separator or the like.

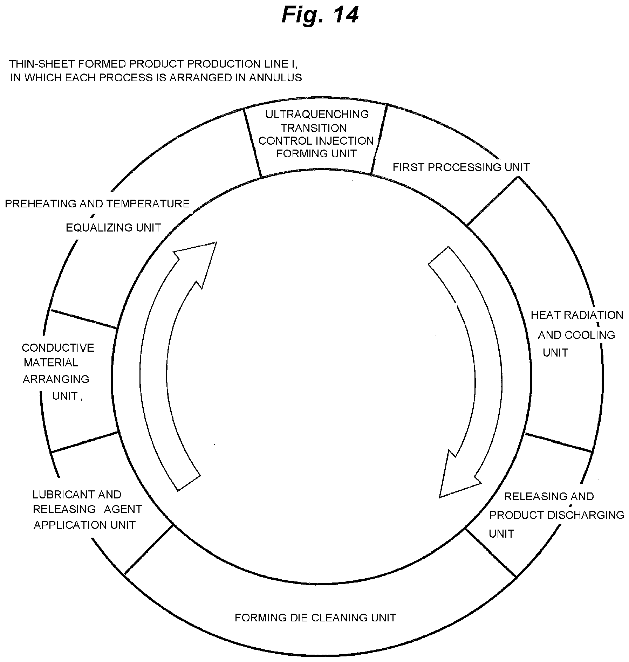

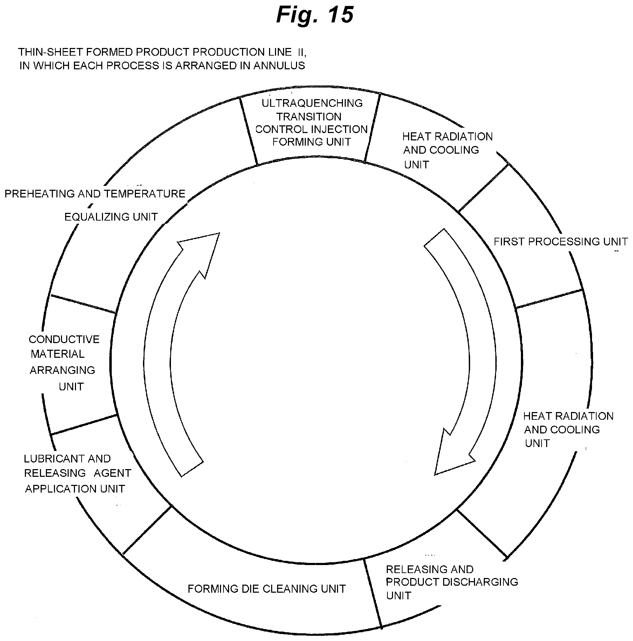

Further, another facility for manufacturing a thin-sheet formed product having a three-dimensional surface microstructure with uneven portions of a desired depth and thickness according to the present invention includes:
1) a lubricant and releasing agent application unit that performs a step of applying lubricant and releasing agent to an inverted three-dimensional surface structure of a forming die that has the inverted three-dimensional surface microstructure with uneven portions of a desired depth and thickness corresponding to the inverted shape of the three-dimensional surface microstructure with uneven portions of a desired depth and thickness;
2) a conductive material arranging unit that performs a step of applying by coating or spraying conductive material powder on the inverted three-dimensional surface structure of the forming die to which lubricant and releasing agent has been applied;
3) a preheating and temperature equalizing unit that performs a step of preheating and equalizing the temperature of the forming die;
4) an ultraquenching transition control injection forming unit that performs a step of melting and mixing raw material metal powder, while spraying the raw material metal powder together with flame and an assist gas using a required thermal spray gun, commencing cooling of the raw material metal powder before the melted and mixed raw material metal powder reaches the forming die by the flow of a predetermined cooling medium sprayed around the raw material metal powder, while spraying the raw material metal powder together with the flame, and cohesively laminating, onto the inverted three-dimensional surface microstructure of the forming die, a metal matrix exhibiting corrosion resistance by the formation of a passivation layer on a surface layer thereof, by spraying of the raw material metal powder that has reached a required solidified state or semi-solidified state;
5) a first processing unit that performs a step of performing upsetting press forming on the cohesive laminate in a desired temperature range using a predetermined tool;
6) a heat radiation and cooling unit that performs a step of radiating heat from and cooling the forming die having the cohesive laminate on which a desired surface structure has been applied by the first processing unit;
7) a releasing and product discharging unit that performs a step of releasing and discharging the thin-sheet formed product that is the cohesive laminate from the forming die; and
8) a forming die cleaning unit that performs a step of cleaning the forming die from which the thin-sheet formed product has been released,
9) wherein each step is arranged in that order on a transport path of a transport device. Note that, preferably a preheating and temperature equalizing unit that performs a step of preheating and equalizing the temperature of the forming die including the inverted three-dimensional surface structure, on which the metal matrix exhibiting corrosion resistance by the formation of a passivation layer on a surface layer thereof is cohesively laminated, is disposed upstream of the first processing unit. Although an outline of such a facility is illustrated in Figs. 14 and 15 as an example in which the transport path of the transport device is arranged in an annular shape, a transport device having a linear or racetrack transport path may be used.

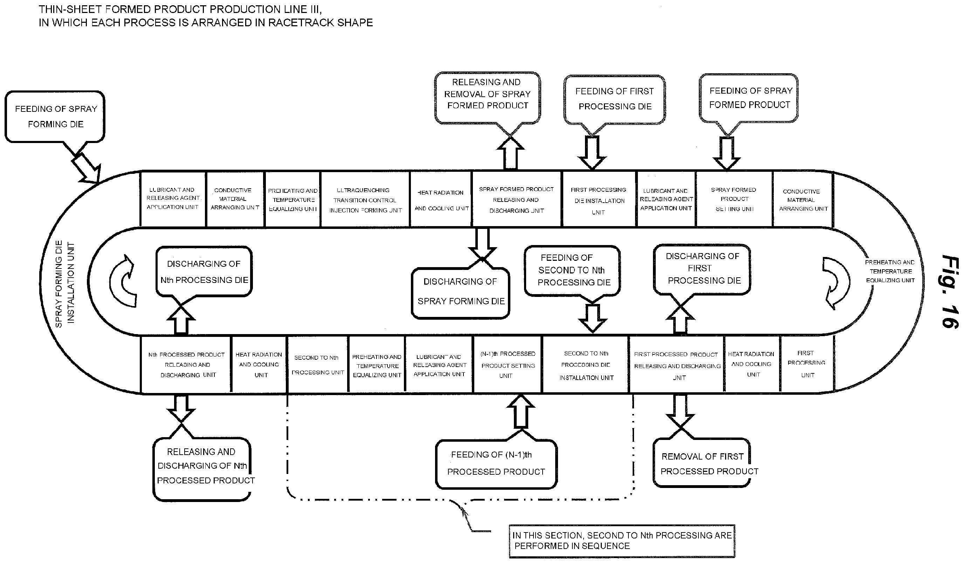

Yet another facility for manufacturing a thin-sheet formed product having a three-dimensional surface microstructure with uneven portions of a desired depth and thickness according to the present invention includes:
1) a transport device that transports a work piece of each desired operation, and in the facility,
2) a spray forming die installation unit that performs a step of feeding and setting a spray forming die having an inverted three-dimensional surface microstructure with uneven portions of a desired depth and thickness in a state where the inverted three-dimensional surface structure facing upward;
3) a lubricant and releasing agent application unit; a conductive material arranging unit; a preheating and temperature equalizing unit; an ultraquenching transition control injection forming unit; and a heat radiation and cooling unit;
4) a releasing and formed product discharging unit that performs a step of releasing a spray formed product from the spray forming die, temporarily removing the spray formed product, and discharging the spray forming die;
5) a first processing die installation unit that performs a step of feeding a first processing die for upsetting press forming of the removed spray formed product;
6) a lubricant and releasing agent application unit;
7) a spray formed product setting unit that performs a step of feeding and setting in the first processing die the spray formed product that has been removed in the releasing and formed product discharging unit;
8) a conductive material arranging unit; and a preheating and temperature equalizing unit;
9) a first processing unit that performs a step of upsetting press forming on the spray formed product;
10) a heat radiation and cooling unit;
11) a first processed product releasing and discharging unit that performs a step of releasing from the spray forming die and temporarily removing the first processed product on which upsetting press forming has been performed and discharging the first processing die;
12) a second to Nth processing die installation unit that performs a step of feeding a second to Nth processing die for upsetting press forming in second and subsequent processing;
13) an (N-1)th processed product setting unit that performs a step of feeding and setting, to the second to the Nth processing die, the first processed product that has been removed in the releasing and formed product discharging unit, or an Nth processed product that has been released and removed from the Nth processing die in an Nth processed product releasing and discharging unit, described below;
14) a lubricant and releasing agent application unit; and a preheating and temperature equalizing unit;
15) a second to Nth processing unit that performs a step of upsetting press forming on an (N-1)th processed product;
16) a heat radiation and cooling unit; and
17) an Nth processed product releasing and discharging unit that performs a step of releasing, removing, and discharging the Nth processed product formed by the upsetting press forming from the second to Nth processing dies and discharging the Nth processing die, are arranged in this order on a transport path of the transport device. Although an outline of such a facility is illustrated in Fig. 16 as an example in which the transport path of the transport device is arranged in a racetrack shape, a transport device having a linear or annular transport path may be used.

### Advantageous Effects of Invention

According to the present invention, it is possible to manufacture simply and at low cost a thin-sheet formed product such as for example a thin sheet with grooves having a three-dimensional surface microstructure with uneven portions of a desired depth and thickness that is suitable as a metal separator for a PEFC with excellent corrosion resistance, conductivity, and formability. The manufactured thin-sheet formed product has high corrosion resistance in the portion of the metal matrix on which the passivation layer that has corrosion resistance is formed on a surface layer thereof, and on both the surface with the three-dimensional surface structure and the rear surface, conductive material penetrates the passivation layer on the surface layer and is exposed on the surface, and so on, so the conductivity is excellent. The product is also advantageous in terms of formability and manufacturing cost, so it is highly suitable as a metallic separator for PEFCs.

When the thickness of a normal metal thin sheet is reduced by cold rolling, the cost of cold rolling increases as the thickness is reduced. However, the metal matrix is formed by spraying in the present invention, and thus, by adjusting the quantity of material powder supplied, the supply speed, and the relative movement speed between the forming die and the spray gun of the ultraquenching transition control injection forming unit and so on, and performing upsetting press forming on the cohesive laminate cohesively laminated in the forming die using a predetermined tool and so on, the thickness of the thin sheet can be adjusted easily and without increasing the cost.

### Brief Description of Drawings

Fig. 1 is a side view illustrating the ultraquenching transition control injector in the attitude for use.
Figs. 2A and 2B are views illustrating a large-sized ultraquenching transition control injector, Fig. 2A is a side view and Fig. 2B is a bottom view.
Fig. 3 is a perspective view generally illustrating a forming die to be used.
Fig. 4 is an overall plan view illustrating an uneven surface which is an inverted three-dimensional surface structure of the forming die of Fig. 3.
Fig. 5 is a side view illustrating an overall schematic view of a thin-sheet formed product production line.
Fig. 6 is a schematic perspective view illustrating important parts of a thin-sheet formed product production line.
Fig. 7 is an external view photograph illustrating a fine uneven surface of a thin-sheet formed product having a groove-like three-dimensional surface structure manufactured by the method of the present invention.
Fig. 8 is a microscope microstructure photograph illustrating a cross section of a thin-sheet formed product having a groove-like three-dimensional surface structure manufactured by the method of the present invention.
Fig. 9 is a view illustrating a DSC evaluation result of an amorphous alloy film containing Si and Mn.
Fig. 10 is a diagram illustrating a method for measuring the contact resistance of an amorphous alloy thin-sheet formed product having a groove-like three-dimensional surface structure.
Fig. 11 is a diagram showing the contact resistance measurement results of an amorphous alloy thin-sheet formed product having a groove-like three-dimensional surface structure.
Fig. 12 is a graph illustrating the results of evaluating the corrosion resistance of a thin-sheet formed product made of an amorphous alloy containing Si and Mn.
Fig. 13 is a conceptual diagram relating to performing an additional press forming process on a thin-sheet formed product having a groove-like three-dimensional surface structure created by the method of Fig. 6.
Fig. 14 is a top view illustrating an overall schematic view of a thin-sheet formed product manufacturing facility in which each manufacturing process is arranged in an annulus.
Fig. 15 is a top view illustrating an overall schematic view of another thin-sheet formed product manufacturing facility in which each manufacturing process is arranged in an annulus.
Fig. 16 is a top view showing an overall schematic view of a thin-sheet formed product manufacturing facility in which each manufacturing process is arranged in a racetrack shape.

### Description of Embodiments

An embodiment of the present invention is described below and illustrated in Figs. 1 to 16. In this embodiment, on one surface of a thin-sheet formed product mainly made of an amorphous alloy a three-dimensional surface microstructure with an uneven portion having desired depth and thickness is formed, preferably as groove-shaped unevenness. Conductive material exists on both the front and back surfaces, penetrating a passivation layer of the surface layer, is exposed on the surface layer and the like, and is fixedly connected to and electrically continuous with an internal metal matrix. Note that the conductive material does not necessarily need to be dispersed in the metal matrix, and may be present only on the surface layer of the uneven surface or on the opposite surface to that surface.

A separator made of amorphous material, stainless steel, or titanium retains corrosion resistance by a passivation layer formed on the surface, but the passivation layer deteriorates the conductivity, so a material with good conductivity is required in the vicinity of the separator surface. Therefore, as an embodiment of the present invention, tungsten carbide (WC) having good conductivity is applied and arranged in advance preferably on the bottom surface of the uneven portion of the three-dimensional surface microstructure of the forming die. An amorphous alloy cohesive laminate is formed by spraying on the surface having an inverted three-dimensional surface structure corresponding to the fine inverted shape (transferred shape) having the uneven part with the desired depth and thickness of the forming die. This is immediately rolled so that the cohesive laminate plastically flows to improve the forming accuracy of the three-dimensional surface microstructure, eliminate internal pores, and even though it is made of amorphous material, conductive material such as WC is fixed and exposed, and a thin-sheet formed product is formed with good conductivity. The conductive material may be WC, carbon, graphite, or the like with an average particle diameter of about 1 to 10 µm, and may be in various forms such as granular, flaky, flake, amorphous precipitate, or a mixture of powders such as these.

A quenching type spray gun (thermal spray gun) is used to form the thin-sheet formed product to be manufactured by spraying an amorphous alloy, and an ultraquenching transition control injector as illustrated in Figs. 2A and 2B was used as the spray gun. Although the gun illustrated in Fig. 1 can be used, the gun illustrated in Figs. 2A and 2B was used from the viewpoint of efficiency as described above. Mixed gas of oxygen and propane is used as fuel, and combustion flame is ejected from flame vents 5 outside of powder ejection ports 6, which are arranged at equal intervals in the widthwise direction. The powder material ejected from the powder ejection ports 6 is completely melted once in the combustion flame. Immediately after being melted, the material is deposited on the surface of a forming die having an inverted three-dimensional surface microstructure while being quenched with a refrigerant mist ejected from a mist ejection port 3 arranged outside the powder ejection ports 6, thereby forming an cohesive laminate. Since this spray gun ejects the material uniformly in the width direction, it is possible to produce a preferable thin-sheet formed product in which the cohesive laminate is formed uniformly in the width direction.

As a metal material to be sprayed by the above spray gun (Figs. 2A and 2B), a gas atomized powder having a composition of Fe55Cr10Mo2Ni7Mn1.5P19B3Si2.5 (numerical value is at%) containing Si (silicon) and Mn (manganese) as impurities was used. This powder is likely to become amorphous even if it contains many impurities, and contains many impurities such as Si and Mn mixed when a low-grade raw material is used in the powder manufacturing process. Nevertheless, an amorphous material can be obtained by melting and quenching, and the resulting amorphous alloy film has excellent corrosion resistance and formability. Powders of other compositions that tend to become amorphous materials can be used to form other amorphous materials (for example, nickel-based Ni65Cr15P16B4, iron-based Fe56.6Cr9Ni8Mo2Cu0.2Si2.5Mn1.5Nb0.7P19C0.5, Fe56Cr10Mo2Ni8P19C1Si2.5Mn1.5 (at%)), but an amorphous alloy film of the same composition formed from a powder of the above composition which can be obtained at low cost was used. Since the cost is low, it is advantageous for producing a large number of thin-sheet formed products such as grooved thin sheets having a large surface area to be used as a material for a PEFC separator.

Regarding the bonding of the conductive powder to the passivation layer of the surface layer of the amorphous alloy thin-sheet formed product to be formed, tungsten carbide having an average particle diameter of 9 µm (hereinafter referred to as WC) and graphite, which can be obtained at a low cost, was used as the powder.

As means for forming a three-dimensional surface microstructure having groove-like unevenness on the surface of the amorphous alloy thin-sheet formed product to which the conductive powder is fixed, the forming die illustrated in Figs. 3 and 4 having, on the surface thereof, an engraved inverted three-dimensional surface microstructure with uneven portions with the required width and depth corresponding as an inverted shape to the three-dimensional surface structure was used. This forming die is made of SS400 standard steel material complying with "JIS G 3101: 2010 Rolled steels for general structure", on which is formed the inverted three-dimensional surface structure with groove-like unevenness having a depth of about 0.4 mm, a groove width of 0.4 mm, and a wall thickness of 0.4 mm as shown in the figure. However, the depth, groove width, and wall thickness may be changed depending on the part, and the cross-sectional shape of the groove is not limited to a rectangular wave as shown in the figure, but may be unevenness such as a trapezoidal wave or a sine curve, either singly or in combination, and so on. In addition, since SS400 steel material is used as the material of the forming die, it is easy to process by indentation of uneven grooves of the inverted three-dimensional surface structure, which is advantageous for manufacturing many disposable forming dies at low cost. Furthermore, Fig. 4 illustrates an example in which a single inverted three-dimensional surface structure having a length of 200 mm and a width of 150 mm is engraved on a forming die. The production efficiency is particularly good if the cohesive laminate released from the forming die after injection and cohesive lamination on the forming die on which is engraved a plurality of the inverted three-dimensional surface structures is divided into a plurality of pieces so that a plurality of thin-sheet formed products can be obtained.

Graphite mixed with WC was applied to the uneven surface of the inverted three-dimensional surface structure of the forming die, as described above. WC or the like may be adhered to the concave bottom surface, the convex top surface, and the convex side surface of the uneven surface of the inverted three-dimensional surface structure of the forming die, but it should be adhered to at least the concave bottom surface.

The above-described ultraquenching transition control injector or the like was installed on a production line (a production facility for thin sheets with grooves) as shown in Fig. 5. A hoop 15 uncoiled from a pickling coil made of ordinary steel is set between a payoff reel 7 and a coil winder 13, and the hoop 15 is moved toward the coil winder 13. The moving hoop 15 is used as a device for transporting the forming die.

In this production line, first, the hoop 15 uncoiled from the payoff reel 7 is heated by a preheater 8 with a propane flame. Next, after the heated hoop 15 is corrected in shape by a leveler 9 for the hoop 15, the above-mentioned forming die (to which a lubricant and a releasing agent are applied, then graphite mixed with WC is applied to the uneven surface with the inverted three-dimensional surface structure) is placed on the hoop 15. Then the hoop 15 on which the forming die is placed is transferred to a heating and equalizing device 10 where the forming die is heated together with the hoop 15 (preheating). An attaching device (not shown) for applying (or spraying) WC or the like to the uneven surface of the inverted three-dimensional surface structure of the forming die and attaching it may be provided immediately upstream of the heating and equalizing device 10.

When the forming die is placed on the surface of the hoop 15 as illustrated in Fig. 5 and is heated to a target temperature (about 250°C), a ultraquenching transition control injector 11 injects the amorphous material onto the uneven surface of the inverted three-dimensional surface structure of the forming die. The forming die is immediately conveyed to a rolling mill 12 and the cohesive laminate made of the amorphous alloy is immediately rolled. The thickness of the cohesive laminate made of the amorphous alloy formed by the spraying is set to a thickness that completely fills the concave portions of the inverted three-dimensional surface structure of the forming die and also at least covers the convex surface. The above-mentioned rolling is performed while the cohesive laminate made of the amorphous alloy formed by thermal spraying is in a supercooled liquid phase state (430°C to 480°C). Fig. 6 illustrates an image of heating of a forming die, injection to the forming die, and immediate rolling.

Further, Fig. 7 shows a perspective external view photograph of the three-dimensional surface structure side (the side having the groove-shaped unevenness) of the amorphous alloy thin-sheet formed product obtained by releasing from the forming die. Note that Fig. 8 illustrates a microscope microstructure photograph of the cross-section of the amorphous alloy thin-sheet formed product before it was released from the forming die and was adhering to and cohesively laminated on the forming die (the forming die used in the processes in Figs. 5 and 6 is at the bottom). When a DSC measurement of this amorphous alloy thin-sheet formed product was performed, a clear exothermic peak was obtained as shown in Fig. 9, indicating that the product was amorphous. It was confirmed that the amorphous rate was 90% or more.

The consistent resistance (contact resistance) of the amorphous alloy thin-sheet formed product produced as described above was measured by the measurement method illustrated in Fig. 10. The results are presented in Fig. 11.

The above-mentioned amorphous material of Fe55Cr10Mo2Ni7Mn1.5P19B3Si2.5 (at%) has a passivation layer formed on the surface layer (surface). The reason the contact resistance is reduced as the rolling pressure is increased as shown in Fig. 11 is considered to be because the WC, which is a conductor, penetrates the passivation layer and cuts into the metal matrix (It is electrically continuous with the metal matrix inside, is exposed on the outer surface, and extends between the inside and outside). Based on these results, it can be seen that the contact resistance that is increased by the formation of the passivation layer can be reduced by applying in advance the WC to the inverted three-dimensional surface structure of the forming die, spraying into the forming die to form the cohesive laminate, then immediately rolling, so that the WC is fixed to the surface of the three-dimensional surface structure side (groove-like unevenness side) of the amorphous alloy thin-sheet formed product that was cohesively laminated.

The results of the corrosion resistance evaluation (anode test) of the amorphous material (Fe55Cr10Mo2Ni7Mn1.5P19B3Si2.5 (at%)) are as shown in Fig. 12. The anode test measures the amount of current (= corrosion amount) flowing by changing the potential from negative to positive. The potential of 1000 mV is the voltage at the time of the maximum load such as when starting a car. It can be seen that the above amorphous material has a current density less than half that of SUS316L stainless steel, and the amount of corrosion is also reduced by half.

The thin-sheet formed product including the metal matrix having the passivation layer that provides corrosion resistance formed on the surface layer and having the three-dimensional surface microstructure with the required depth and thickness of uneven portions, which is obtained as described above (Fig. 6, etc.), may be again heated to 430°C to 480°C (the temperature range in which the amorphous material is in a supercooled liquid phase state), and additionally subjected to warm press forming/warm roll forming, to form a separator having a large contact area and high dimensional accuracy. Fig. 13 is a conceptual diagram relating to the execution of the warm press forming. For this additional warm press forming, the forming die used in Fig. 6 may be used as it is. However warm sizing press forming may be performed by repeatedly using an additional forming die formed of a steel material or a super-hard material generally called tool steel, high speed steel, die steel, or the like, which has better properties (for example, strength, toughness, hardness) at high temperatures than the forming die. Instead of the additional forming die set shown in Fig. 13, it is also possible to use an additional forming die set in which both the lower die and the upper die have a groove-like uneven shape of the inverted three-dimensional surface structure.

By additionally performing the warm press forming in this way, the cohesive laminate plastically flows to reduce the pores therein, while the WC in the surface layer with the groove-like uneven shape on the three-dimensional surface structure side of the amorphous alloy thin-sheet formed product more securely penetrates the passivation layer of the surface layer of the amorphous alloy and fixes. In addition the shape accuracy of the groove-like uneven shape on the three-dimensional surface structure side is improved.

The manufacture of a thin-sheet formed product having a three-dimensional surface microstructure with uneven portions of a desired depth and thickness according to the present invention is not limited to the method shown in Fig. 6 or the like.

For example, the following procedure may be adopted.
i) Lay the graphite powder on (the bottom of) the groove-like uneven shape of the inverted three-dimensional surface structure on the upper surface of the forming die (lower die),
ii) Perform injection (injection by the above-mentioned spray gun) thereon to form the cohesive laminate made of an amorphous alloy having a thickness sufficiently covering the groove-like uneven shape portion having the inverted three-dimensional surface structure, and
iii) Press an additional forming die (upper die) having a flat pressing surface down onto the upper surface of the amorphous alloy cohesive laminate (then, the upper and lower dies are separated, and the cohesive laminate is separated and removed from the lower die).

In this case also, the thin-sheet formed product having the uneven shape suitable for a fuel cell (PEFC) separator can be produced, the same as described previously. Namely, the metal matrix with the passivation layer that provides corrosion resistance formed as a surface layer thereon has, in the surface thereof, a groove-like uneven shape as the three-dimensional surface microstructure having uneven portions of the required depth and thickness, and the conductive material component on the surface having the uneven shape penetrates through the passivation layer becoming electrically continuous with the metal matrix, and being exposed on the surface.

Also, when using a quenching thermal spray gun as described above, in addition to the metal (powder material), conductive material component particles (having a high melting point so as not to melt in the flame and not form a solid solution in the molten metal) may be sprayed together with the flame. In this case, the conductive material component particles are not only distributed and present on the three-dimensional surface structure forming surface of the amorphous alloy thin-sheet formed product, but also in the interior of the thin-sheet formed product (metal matrix) and on the back surface opposite to the uneven surface, and a thin-sheet formed product having a preferable groove-like uneven shape can be produced.

The previously explained Fig. 10 illustrates a measurement for a formed product in which the conductive material component particles are distributed within the metal matrix and on the surface opposite to the uneven surface by spraying including the conductive material component particles (WC) as described above.

Further, the manufacturing facility according to the present invention for manufacturing a thin-sheet formed product having a three-dimensional surface microstructure provided with uneven portions having the desired depth and thickness is not limited to the manufacturing facility shown in Figs. 5, 6, and so on.

For example, as illustrated in Figs. 14 and 15, the manufacturing facility may include,
1) a lubricant and releasing agent application unit that performs a step of applying lubricant and releasing agent to an inverted three-dimensional surface structure of a forming die that has the inverted three-dimensional surface microstructure with uneven portions of a desired depth and thickness corresponding to the inverted shape of the three-dimensional surface microstructure with uneven portions of a desired depth and thickness;
2) a conductive material arranging unit that performs a step of applying by coating or spraying conductive material powder on the inverted three-dimensional surface structure of the forming die to which the lubricant and releasing agent has been applied;
3) a preheating and temperature equalizing unit that performs a step of preheating and equalizing the temperature of the forming die;
4) an ultraquenching transition control injection forming unit that performs a step of melting and mixing raw material metal powder (preferably including conductive material powder), while spraying the raw material metal powder together with flame and an assist gas using a required thermal spray gun, commencing cooling of the raw material metal powder before the melted and mixed raw material metal powder reaches the forming die by the flow of a predetermined cooling medium sprayed around the raw material metal powder, while spraying the raw material metal powder together with the flame, and cohesively laminating, onto the inverted three-dimensional surface microstructure of the forming die, a metal matrix exhibiting corrosion resistance by the formation of a passivation layer on a surface layer thereof, by spraying of the raw material metal powder that has reached a required solidified state or semi-solidified state;
5) a first processing unit that performs a step of performing upsetting press forming on the cohesive laminate in a desired temperature range using a predetermined tool;
6) a heat radiation and cooling unit that performs a step of radiating heat from and cooling the forming die having the cohesive laminate on which a desired surface structure has been applied by the first processing unit;
7) a releasing and product discharging unit that performs a step of releasing and discharging the thin-sheet formed product that is the cohesive laminate from the forming die; and
8) a forming die cleaning unit that performs a step of cleaning mainly the inverted three-dimensional surface microstructure portion of the forming die from which the thin-sheet formed product has been released,
   which are annularly arranged in this order on a transport path of a transport device.

In addition, if a preheating and temperature equalizing unit that performs a step of preheating and equalizing the temperature of the forming die including the inverted three-dimensional surface structure, on which the metal matrix exhibiting corrosion resistance by the formation of a passivation layer on a surface layer thereof is cohesively laminated, is disposed upstream of the first processing unit, plastic flow of the cohesive laminate is stably exhibited during the upsetting press forming in the first processing section, which is preferable.

Although a transport device having an annular transport path is shown, a transport device having a transport path of various shapes such as a linear shape or a racetrack shape may be used depending on the restrictions such as the installation space of the facility.

Further, the manufacturing facility according to the present invention for manufacturing a thin-sheet formed product having a three-dimensional surface microstructure provided with uneven portions having the desired depth and thickness is not limited to the manufacturing facility shown in Figs. 5, 6, and so on.

For example, as shown in Fig. 16,
1) the manufacturing facility includes a transport device that transports a work piece of each desired operation, and in the facility,
2) a spray forming die installation unit that performs a step of feeding and setting a spray forming die having an inverted three-dimensional surface microstructure with uneven portions of a desired depth and thickness in a state where the inverted three-dimensional surface structure facing upward;
3) a lubricant and releasing agent application unit; a conductive material arranging unit; a preheating and temperature equalizing unit; an ultraquenching transition control injection forming unit; and a heat radiation and cooling unit;
4) a releasing and formed product discharging unit that performs a step of releasing a spray formed product from the spray forming die, temporarily removing the spray formed product, and discharging the spray forming die;
5) a first processing die installation unit that feeds a first processing die for upsetting press forming of the removed spray formed product;
6) a lubricant and releasing agent application unit;
7) a spray formed product setting unit that performs a step of feeding and setting in the first processing die the spray formed product that has been removed in the releasing and formed product discharging unit;
8) a conductive material arranging unit; and a preheating and temperature equalizing unit;
9) a first processing unit that performs a step of upsetting press forming on the spray formed product;
10) a heat radiation and cooling unit;
11) a first processed product releasing and discharging unit that performs a step of releasing from the spray forming die and temporarily removing the first processed product on which upsetting press forming has been performed and discharging the first processing die;
12) a second to Nth processing die installation unit that performs a step of feeding a second to Nth processing die for upsetting press forming in second and subsequent processing;
13) an (N-1)th processed product setting unit that performs a step of feeding and setting, to the second to the Nth processing die, the first processed product that has been removed in the releasing and formed product discharging unit, or an Nth processed product that has been released and removed from the Nth processing die in an Nth processed product releasing and discharging unit, described below;
14) a lubricant and releasing agent application unit; and a preheating and temperature equalizing unit;
15) a second to Nth processing unit that performs a step of upsetting press forming on an (N-1)th processed product;
16) a heat radiation and cooling unit; and
17) an Nth processed product releasing and discharging unit that performs a step of releasing, removing, and discharging the Nth processed product formed by the upsetting press forming from the second to Nth processing dies and discharging the Nth processing die,
are arranged in this order on a transport path of the transport device.

As described above, by performing upsetting press forming, by using not only the first processing die but also the second to Nth processing dies which are preheated and equalized in temperature, on the spray formed product formed by cohesively laminating, on the inverted three-dimensional surface structure, a metal matrix exhibiting corrosion resistance by the formation of a passivation layer on a surface layer thereof, plastic flow of the cohesive laminate of the spray formed product can be stably and repeatedly caused, and thus the desired surface property can be obtained, which is preferable.

Besides transporting and processing in the order illustrated along the transport path in Fig. 16, formed product, processed product, and processing dies may be appropriately moved. For example, when a processed product is released from the die and removed, the processed product can be moved to the preheating and temperature equalizing unit, and the ultraquenching transition control injection forming can be performed again, and so on.

Note that, although illustrated as a transport device having a racetrack-shaped transport path, a transport device having a transport path of various shapes such as a linear shape or an annular shape may be used depending on restrictions such as installation space of the facility.

### Reference Signs List

- 1: Powder supply pipe
- 2: Mist ejection nozzle
- 3: Mist ejection port
- 4: Inert gas ejection port
- 5: Flame vent
- 6: Powder ejection port
- 7: Payoff reel
- 8: Thin sheet substrate preheater
- 9: Leveler
- 10: Heating and equalizing device
- 11: Ultraquenching transition control injector
- 12: Rolling mill
- 13: Coil winder
- 14: Released thin sheet
- 15: Hoop
- 16: Forming die

## Claims

1. A thin-sheet formed product having a three-dimensional surface microstructure with uneven portions of a desired depth and thickness, and comprising a metal matrix exhibiting corrosion resistance by the formation of a passivation layer on a surface layer thereof, wherein a conductive material that penetrates the passivation layer of the surface layer region of the passivation layer and is electrically continuous with the metal matrix in the interior is partially exposed on a protruding front end surface in the three-dimensional surface structure of the thin-sheet formed product and on a back surface opposite to the front end surface.

2. The thin-sheet formed product having a three-dimensional surface microstructure with uneven portions of a desired depth and thickness according to claim 1, wherein the front end surface is provided with the conductive material at a higher density than the back surface.

3. The thin-sheet formed product having a three-dimensional surface microstructure with uneven portions of a desired depth and thickness according to claim 1 or 2, wherein the conductive material is a granular, flaky, or amorphous precipitate, and, over the whole surface layer region of the surface layer of the passivation layer, is exposed on the surface, penetrates the passivation layer, and is electrically continuous with the metal matrix in the interior.

4. The thin-sheet formed product having a three-dimensional surface microstructure with uneven portions of a desired depth and thickness according to any one of claims 1 to 3, wherein the metal matrix is amorphous, and the conductive material is WC or graphite.

5. The thin-sheet formed product having a three-dimensional surface microstructure with uneven portions of a desired depth and thickness according to any one of claims 1 to 4, wherein the metal matrix is an amorphous alloy containing Si and Mn.

6. The thin-sheet formed product having a three-dimensional surface microstructure with uneven portions of a desired depth and thickness according to any one of claims 1 to 5, wherein the metal matrix is an amorphous alloy having the composition Fe55Cr10Mo2Ni7Mn1.5P19B3Si2.5, Fe56.6Cr9Ni8Mo2Cu0.2Si2.5Mn1.5Nb0.7P19C0.5, Fe56Cr10Mo2Ni8P19C1Si2.5Mn1.5, or Ni65Cr15P16B4 (all numerical values are at%).

7. The thin-sheet formed product having a three-dimensional surface microstructure with uneven portions of a desired depth and thickness according to any one of claims 1 to 6, obtained by melting and mixing raw material metal powder including metal material powder from which the metal matrix is constituted and powder of the conductive material, while spraying the raw material metal powder together with flame and an assist gas using a required thermal spray gun; directing the spray together with the flame at the required distance and angle towards an inverted three-dimensional surface structure of a forming die that has the inverted three-dimensional surface microstructure with uneven portions of a desired depth and thickness corresponding to the inverted shape of the three-dimensional surface microstructure with uneven portions of a desired depth and thickness, in which the conductive material is provided on the bottom surfaces of concave portions of the inverted three-dimensional surface structure, and that has been heated to a desired temperature in advance; commencing cooling of the raw material metal powder before the melted and mixed raw material metal powder reaches the forming die by the flow of a predetermined cooling medium that is sprayed around the raw material metal powder; cohesively laminating the raw material metal powder that has reached a required solidified state or semi-solidified state on the uneven portions of the inverted three-dimensional surface microstructure of the forming die so that the concave portions of the uneven portions is filled, and continuing to spray the raw material metal powder until a required deposition thickness is achieved; subsequently performing upsetting press forming on the surface of the cohesive laminate using a predetermined tool to apply a desired surface structure, and then cooling the cohesive laminate; and releasing the cohesive laminate from the forming die.

8. A separator for a polymer electrolyte fuel cell, comprising the thin-sheet formed product having a three-dimensional surface microstructure with uneven portions of a desired depth and thickness according to any one of claims 1 to 7, the thin-sheet formed product including groove-like uneven portions of a desired depth and thickness.

9. A method for manufacturing a thin-sheet formed product having a three-dimensional surface microstructure with uneven portions of a desired depth and thickness, the method comprising: melting and mixing raw material metal powder including metal material powder from which a metal matrix exhibiting corrosion resistance by the formation of a passivation layer on a surface layer thereof is constituted and conductive material powder, while spraying the raw material metal powder together with flame and an assist gas using a required thermal spray gun; directing the spray together with the flame at the required distance and angle towards an inverted three-dimensional surface structure of a forming die that has the inverted three-dimensional surface microstructure with uneven portions of a desired depth and thickness corresponding to the inverted shape of the three-dimensional surface microstructure with uneven portions of a desired depth and thickness and that has been heated to a desired temperature in advance; commencing cooling of the raw material metal powder before the melted and mixed raw material metal powder reaches the forming die by the flow of a predetermined cooling medium that is sprayed around the raw material metal powder; cohesively laminating the raw material metal powder that has reached a required solidified state or semi-solidified state on the uneven portions of the inverted three-dimensional surface microstructure of the forming die so that the concave portions of the uneven portions is filled, and continuing to spray the raw material metal powder until a required deposition thickness is achieved; subsequently performing upsetting press forming on the surface of the cohesive laminate using a predetermined tool in a desired temperature range to apply a desired surface structure, and then cooling the cohesive laminate; and releasing the cohesive laminate from the forming die.

10. The method for manufacturing a thin-sheet formed product according to claim 9, comprising obtaining a high concentration of the conductive material on a front end surface of the three-dimensional surface microstructure with uneven portions of a desired depth and thickness by attaching and fixing the powder of the conductive material on the bottom surfaces of the concave portions of the inverted three-dimensional surface structure using a spraying method or coating method in advance, and then spraying and cohesively laminating the raw material metal powder in a solidified state or a semi-solidified state.

11. The method for manufacturing a thin-sheet formed product having a three-dimensional surface microstructure with uneven portions of a desired depth and thickness according to claim 9 or 10, wherein the upsetting press forming on the surface of the cohesive laminate in the desired temperature range is by press forming.

12. The method for manufacturing a thin-sheet formed product having a three-dimensional surface microstructure with uneven portions of a desired depth and thickness according to claim 9 or 10, wherein the upsetting press forming on the surface of the cohesive laminate in the desired temperature range is by roll forming.

13. A method for manufacturing a thin-sheet formed product having a three-dimensional surface microstructure with uneven portions of a desired depth and thickness, the method comprising: melting and mixing raw material metal powder including metal material powder from which a metal matrix exhibiting corrosion resistance by the formation of a passivation layer on a surface layer thereof is constituted, while spraying the raw material metal powder together with flame and an assist gas using a required thermal spray gun; directing the spray together with the flame at the required distance and angle towards an inverted three-dimensional surface structure of a forming die that has the inverted three-dimensional surface microstructure with uneven portions of a desired depth and thickness corresponding to the inverted shape of the three-dimensional surface microstructure with uneven portions of a desired depth and thickness, in which the conductive material is arranged on the bottom surfaces of the concave portions of the inverted three-dimensional surface microstructure using a spraying method or coating method in advance, and that has been heated to a desired temperature in advance; commencing cooling of the raw material metal powder before the melted and mixed raw material metal powder reaches the forming die by the flow of a predetermined cooling medium that is sprayed around the raw material metal powder; cohesively laminating the raw material metal powder that has reached a required solidified state or semi-solidified state on the uneven portions of the inverted three-dimensional surface microstructure of the forming die so that the concave portions of the uneven portions is filled, and continuing to spray the raw material metal powder until a required deposition thickness is achieved; subsequently performing upsetting press forming on the surface of the cohesive laminate using a predetermined tool in a desired temperature range to apply a desired surface structure, and then cooling the cohesive laminate; and releasing the cohesive laminate from the forming die.

14. The method for manufacturing a thin-sheet formed product having a three-dimensional surface microstructure with uneven portions of a desired depth and thickness according to claim 13, comprising attaching and fixing the powder of the conductive material on the surface of the cohesive laminate using a spraying method or coating method in advance, and then performing the upsetting press forming on the surface of the cohesive laminate in a desired temperature range by a press method.

15. The method for manufacturing a thin-sheet formed product having a three-dimensional surface microstructure with uneven portions of a desired depth and thickness according to claim 13, comprising attaching and fixing the powder of the conductive material on the surface of the cohesive laminate using a spraying method or coating method in advance, and then performing the upsetting press forming on the surface of the cohesive laminate in a desired temperature range by roll forming.

16. The method for manufacturing a thin-sheet formed product having a three-dimensional surface microstructure with uneven portions of a desired depth and thickness according to any of claims 9 to 15, comprising: attaching and fixing the powder of the conductive material to the bottom surfaces of the concave portions of the inverted three-dimensional surface microstructure of the forming die using a spraying method or coating method in advance, and then placing, on a transport unit of a transport device, the forming die so that the inverted three-dimensional surface structure faces upward; pre-heating the forming die to a desired temperature by transporting the transport unit on which the forming die is placed to a heating device position for preheating; transporting the transport unit on which the preheated forming die is placed to a thermal spray unit position including the thermal spray gun, and cohesively laminating, onto the inverted three-dimensional surface structure of the forming die, a metal matrix exhibiting corrosion resistance by the formation of a passivation layer on a surface layer thereof by spraying using the thermal spray gun; transporting the transport unit on which the forming die including the cohesive laminate deposited thereon is placed, to an upsetting press forming unit, applying a desired surface structure to the cohesive laminate on the forming die by upsetting press forming by either press forming or roll forming, and then cooling the forming die; and releasing the cohesive laminate from the forming die.

17. The method for manufacturing a thin-sheet formed product having a three-dimensional surface microstructure with uneven portions of a desired depth and thickness according to any of claims 9 to 16, comprising: releasing the cohesive laminate from the forming die after the upsetting press forming, performing an additional forming process on the released cohesive laminate by warm pressing using an additional forming die to apply a desired surface structure, and then cooling the cohesive laminate, and releasing the cohesive laminate from the additional forming die.

18. A facility for manufacturing a thin-sheet formed product having a three-dimensional surface microstructure with uneven portions of a desired depth and thickness, the facility comprising a transport device that transports a forming die having an inverted three-dimensional surface microstructure with uneven portions of a desired depth and thickness, the forming die being placed in a state where the inverted three-dimensional surface structure facing upward, wherein
a heating device for preheating the forming die; an ultraquenching transition control injector that melts and mixes raw material metal powder, while spraying the raw material metal powder together with flame and an assist gas using a required thermal spray gun, that commences cooling of the raw material metal powder before the melted and mixed raw material metal powder reaches the forming die by the flow of a predetermined cooling medium sprayed around the raw material metal powder, while spraying the raw material metal powder together with the flame, and that cohesively laminates, onto the inverted three-dimensional surface microstructure of the forming die, a metal matrix exhibiting corrosion resistance by the formation of a passivation layer on a surface layer thereof, by spraying of the raw material metal powder that has reached a required solidified state or semi-solidified state; an upsetting device that performs upsetting press forming on the cohesive laminate in a desired temperature range using a predetermined tool; a device that cools the forming die having the cohesive laminate on which a desired surface structure is applied; and a releasing device that releases the thin-sheet formed product that is the cohesive laminate from the forming die, are arranged in that order on a transport path of the transport device.

19. The facility for manufacturing a thin-sheet formed product having a three-dimensional surface microstructure with uneven portions of a desired depth and thickness according to claim 18, wherein a conductive material arranging device that applies a conductive material component on a surface of the inverted three-dimensional surface structure of the forming die, by coating or spraying, is disposed in a position on the transport path of the transport device on the upstream side of the heating device.

20. The facility for manufacturing a thin-sheet formed product having a three-dimensional surface microstructure with uneven portions of a desired depth and thickness according to claim 18 or 19, further comprising, in addition to the transport device, a sizing press forming facility using a warm press device or a warm roll forming facility using a mill roll that use an additional forming die having a desired additional forming shape formed on a surface thereof for the thin-sheet formed product that has been released from the forming die.

21. A facility for manufacturing a thin-sheet formed product having a three-dimensional surface microstructure with uneven portions of a desired depth and thickness, the facility comprising a transport device that transports a forming die having an inverted three-dimensional surface microstructure with uneven portions of a desired depth and thickness, the forming die being placed in a state where the inverted three-dimensional surface structure facing upward, wherein
a lubricant and releasing agent application unit that performs a step of applying lubricant and releasing agent to the inverted three-dimensional surface structure of the forming die; a conductive material arranging unit that performs a step of applying by coating or spraying conductive material powder on the inverted three-dimensional surface structure of the forming die to which the lubricant and releasing agent has been applied; a preheating and temperature equalizing unit that performs a step of preheating and equalizing the temperature of the forming die; an ultraquenching transition control injection forming unit that performs a step of melting and mixing raw material metal powder, while spraying the raw material metal powder together with flame and an assist gas using a required thermal spray gun, commencing cooling of the raw material metal powder before the melted and mixed raw material metal powder reaches the forming die by the flow of a predetermined cooling medium sprayed around the raw material metal powder, while spraying the raw material metal powder together with the flame, and cohesively laminating, onto the inverted three-dimensional surface microstructure of the forming die, a metal matrix exhibiting corrosion resistance by the formation of a passivation layer on a surface layer thereof, by spraying of the raw material metal powder that has reached a required solidified state or semi-solidified state; a first processing unit that performs a step of performing upsetting press forming on the cohesive laminate in a desired temperature range using a predetermined tool; a heat radiation and cooling unit that performs a step of radiating heat from and cooling the forming die having the cohesive laminate on which a desired surface structure has been applied by the first processing unit; a releasing and product discharging unit that performs a step of releasing and discharging the thin-sheet formed product that is the cohesive laminate from the forming die; and a forming die cleaning unit that performs a step of cleaning the forming die from which the thin-sheet formed product has been released, are arranged in this order on a transport path of the transport device.

22. The facility for manufacturing a thin-sheet formed product having a three-dimensional surface microstructure with uneven portions of a desired depth and thickness according to claim 19, wherein a preheating and temperature equalizing unit that performs a step of preheating and equalizing the temperature of the forming die including the inverted three-dimensional surface structure, on which the metal matrix exhibiting corrosion resistance by the formation of a passivation layer on a surface layer thereof is cohesively laminated, is disposed upstream of the first processing unit.

23. A facility for manufacturing a thin-sheet formed product having a three-dimensional surface microstructure with uneven portions of a desired depth and thickness, comprising a transport device that transports a work piece of each desired operation, wherein
a spray forming die installation unit that performs a step of feeding and setting a spray forming die having an inverted three-dimensional surface microstructure with uneven portions of a desired depth and thickness in a state where the inverted three-dimensional surface structure facing upward; a lubricant and releasing agent application unit; a conductive material arranging unit; a preheating and temperature equalizing unit; an ultraquenching transition control injection forming unit; a heat radiation and cooling unit; a releasing and formed product discharging unit that performs a step of releasing a spray formed product from the spray forming die, temporarily removing the spray formed product, and discharging the spray forming die; a first processing die installation unit that feeds a first processing die for upsetting press forming of the removed spray formed product; a lubricant and releasing agent application unit; a spray formed product setting unit that performs a step of feeding and setting in the first processing die the spray formed product that has been removed in the releasing and formed product discharging unit; a conductive material arranging unit; a preheating and temperature equalizing unit; a first processing unit that performs a step of upsetting press forming on the spray formed product; a heat radiation and cooling unit; a first processed product releasing and discharging unit that performs a step of releasing from the spray forming die and temporarily removing the first processed product on which upsetting press forming has been performed and discharging the first processing die; a second to Nth processing die installation unit that performs a step of feeding a second to Nth processing die for upsetting press forming in second and subsequent processing; an (N-1)th processed product setting unit that performs a step of feeding and setting, to the second to the Nth processing die, the first processed product that has been removed in the releasing and formed product discharging unit, or an Nth processed product that has been released and removed from the Nth processing die in an Nth processed product releasing and discharging unit, described below; a lubricant and releasing agent application unit; a preheating and temperature equalizing unit; a second to Nth processing unit that performs a step of upsetting press forming on an (N-1)th processed product; a heat radiation and cooling unit; and an Nth processed product releasing and discharging unit that performs a step of releasing, removing, and discharging the Nth processed product formed by the upsetting press forming from the second to Nth processing dies and discharging the Nth processing die, are arranged in this order on a transport path of the transport device.

24. The facility for manufacturing a thin-sheet formed product having a three-dimensional surface microstructure with uneven portions of a desired depth and thickness according to any one of claims 18 to 23, wherein the transport path of the transport device is arranged in an annular shape, a racetrack shape, or a linear shape.

25. A thin sheet with grooves, wherein a metal matrix exhibiting corrosion resistance by formation of a passivation layer on a surface layer thereof has groove-like unevenness on a surface thereof, and conductive material component particles are present on the surface having the unevenness so as to penetrate the passivation layer without being in solid solution.

26. A method of manufacturing a thin sheet with grooves, the method comprising: attaching a conductive material component to a surface of a die having groove-like unevenness; forming a corrosion-resistant alloy film with a thickness that fills the unevenness by spraying onto the surface; and performing warm pressing of the film immediately after forming the film
to form, on a surface of a metal matrix exhibiting corrosion resistance by formation of a passivation layer, groove-like unevenness to which the conductive material component is fixed.

27. A facility for manufacturing a thin sheet with grooves, the facility comprising a transport device that transports a die that has groove-like unevenness on a surface thereof and in which a conductive material component is attached to the surface, in a state where the surface faces upward, wherein
a heating device that preheats the die; a quenching thermal spray gun that forms, on the surface of the die, a corrosion-resistant alloy film, by spraying and melting metal powder together with flame and cooling the flame with a cooling gas; and a rolling mill that performs warm rolling of the corrosion-resistant alloy film immediately after the corrosion-resistant alloy film is formed, are arranged in that order on a transport path of the transport device.
